## Europäisches Patentamt
## European Patent Office
## Office européen des brevets

(19)

(11) Veröffentlichungsnummer: **0 312 706 B1**

# (12) EUROPÄISCHE PATENTSCHRIFT

(45) Veröffentlichungstag der Patentschrift:
**19.06.91 Patentblatt 91/25**

(51) Int. Cl.⁵: **E01C 13/00**

(21) Anmeldenummer: **88111114.0**

(22) Anmeldetag: **12.07.88**

(54) Verfahren zur Herstellung eines Belags und seine Verwendung.

(30) Priorität: **17.10.87 DE 3735305**

(43) Veröffentlichungstag der Anmeldung:
**26.04.89 Patentblatt 89/17**

(45) Bekanntmachung des Hinweises auf die
Patenterteilung:
**19.06.91 Patentblatt 91/25**

(84) Benannte Vertragsstaaten:
**AT BE CH DE ES FR GB GR IT LI LU NL SE**

(56) Entgegenhaltungen:
**EP-A- 0 005 473**
**DE-A- 2 228 111**
**DE-A- 2 600 469**
**FR-A- 2 391 319**
**US-A- 4 112 176**

(73) Patentinhaber: **C. Voigt Söhne GmbH & Co.**
**Wartburgstrasse 34**
**W-4620 Castrop-Rauxel (DE)**

(72) Erfinder: **Klein, Rudolf**
**Greifswalderstrasse 1**
**W-4200 Oberhausen 11 (DE)**

(74) Vertreter: **Patentanwälte Dipl.-Ing. Bodo**
**Thielking Dipl.-Ing. Otto Elbertzhagen**
**Gadderbaumer Strasse 20**
**W-4800 Bielefeld 1 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein neues Verfahren zur Herstellung eines Belages auf Basis einer Polyurethan-Vergußmasse (Siehe z.B. EP-A-0 005 473). Derartige Beläge werden im Bauwesen als Abdichtungen und zur Herstellung von Sport- und Spielflächen verwendet (vgl. Polyurethane, Kunststoff-Handbuch, 2. Auflage, Bd. 7, 462 f).

Die Beläge werden aus den Polyurethan-Rohstoffen, isocyanathaltigen Polyurethanpräpolymeren und Polyolen, direkt am Einbauort hergestellt. Bedingt durch die Reaktionsfähigkeit der Isocyanat-Gruppe mit Wasser unter Freisetzung von Kohlendioxid, muß hierbei darauf geachtet werden, daß sowohl der Untergrund als auch die als Füller eingesetzten Gummigranulate wasserfrei sind, sonst entstehen Haftungsprobleme am Untergrund oder es bildet sich anstelle eines festen Belags eine schaumartige Masse. Dies ist vor allem bei Außenanlagen problematisch und beschränkt die Zeiten, in denen ein solcher Belag gefertigt werden kann, auf trockene Schönwetterperioden. In Gebieten mit ständig hoher Feuchtigkeitsbelastung sind derartige Beläge nur mit großem Aufwand an Abdeckung und Trocknung zu fertigen.

Es ist daher die Aufgabe der vorliegenden Erfindung, ein Verfahren zur Herstellung eines Belages auf der Basis von Polyurethan bereitzustellen, mit dem dieser Belag auch bei feuchtem Klima, auf feuchtem Untergrund und eventuell sogar mit feuchtem Füll- oder Abstreugranulat hergestellt werden kann ohne daß Haftungsminderungen oder eine unkontrollierte Schaumbildung entstehen.

Die Lösung der Aufgabe erfolgt durch ein Verfahren gemäß der Ansprüche 1 bis 10. Die so gefertigten Beläge finden Verwendung gemäß der Ansprüche 11 bis 14 als glatte oder mit einem elastischen Granulat abgestreute Spiel- oder Sportplatzbeläge, als Abdichtungen im Bausektor, vorwiegend im Dachbereich oder auf Parkdecks oder als Spritzbeschichtung.

Es wurde gefunden, daß Polyurethanpräpolymere mit einem Isocyanatgehalt von 2,5 bis 8,5% mit Wasser gemischt und gehärtet werden können ohne daß eine nennenswerte Schaumbildung erfolgt, wenn dieser Mischung ein Kohlendioxid bindendes Mittel und ein Wasser adsorbierendes Mittel beigefügt werden.

Diese Mischungen haben eine Verarbeitungszeit bei 20°C von 15 bis 45 min. Sie lassen sich in dieser Zeit zu einer selbstausgleichenden Schicht gießen und härten innerhalb von 24 h zu einem festen Belag aus. Überraschenderweise wird eine ausgezeichnete Haftung auf dem Untergrund erzielt auch wenn dieser Untergrund vor der Beschichtung feucht war. Desgleichen wird in die Mischung eingestreutes oder gegen Ende der Verarbeitungszeit auf die Mischung aufgestreutes Granulat auch dann fest eingebunden wenn es feucht ist. Diese überraschenden Ergebnisse ermöglichen die erfindungsgemäße Herstellung des Belages ohne besondere Vorsichtsmaßnahmen auch bei feuchtem oder regnerischem Wetter.

Erfindungsgemäß einzusetzende Polyurethanpräpolymere sind alle handelsüblichen isocyanathaltigen Präpolymere, die durch Umsetzung mehrfunktioneller Isocyanate mit Polyester- oder Polyetherpolyolen erhalten werden. Entscheidend ist, daß der Isocyanatgehalt im Bereich von 2,5 bis 8,5% bevorzugt im Bereich von 3 bis 5% liegt und daß die Präpolymere flüssig sind.

Bevorzugt wird eine Viskosität im Bereich von 2.000 bis 6.000 mPas (20°C). Es ist allerdings auch möglich die Viskosität eines höherviskosen Präpolymers durch Zugabe von verträglichen organischen Lösemitteln wie z.B. Ester, Ketone oder Aromaten oder durch Zugabe von niedrigviskosen Weichmachern wie phosphororganischen Verbindungen oder Phthalaten auf einen Wert innerhalb dieses Bereichs einzustellen.

Da die Lösemittel ebenso wie das nicht umgesetzte Wasser, aus dem gehärteten Belag herausdiffendieren bedingen sie eine gewisse Schrumpfung des Belags. Einerseits führt diese zwar zu einer inneren Spannung des Materials, die, da sie auch auf die Haftfläche wirkt, begrenzt sein muß. Andererseits wirkt gerade eine geringe innere Zugspannung einer evtuellen Blasenbildung an Stellen fehlerhafter Haftung auf dem Untergrund entgegen. Eine Lösemittelmenge bis zu 20% des Präpolymers kann daher noch eingesetzt werden.

Weichmacher verbleiben zwar im ausgehärteten Belag. Da sie aber die Weichheit des Endprodukts beeinflussen, muß ihr Einsatz mit dem jeweiligen Präpolymer und eventuell zusätzlich verwendeten Vernetzern abgestimmt werden, um die gewünschte Elastizität des fertigen Belages einzustellen.

Kohlendioxid bindende Mittel sind Metall-oxide oder -hydroxide, die mit Kohlendioxid unter Carbonatbildung reagieren. Bevorzugt sind die Oxide oder Hydroxide der Metalle, die schwer lösliche Carbonate oder schwer lösliche basische Carbonate bilden. Insbesondere bevorzugt sind Oxide oder Hydroxide des Calciums, Magnesiums oder Zinks.

Wasser adsorbierende Mittel sind solche Stoffe, die aufgrund ihrer Polarität oder Gelstruktur Wassermoleküle festzuhalten vermögen, die aber ebenso Wasser wieder leicht abgeben.

Beispiele für entsprechende organische Stoffe sind Mehl, Stärke, insbesondere aufgeschlossene, sogenannte kaltwasserlösliche Stärke, Dextrin oder Methylcellulose.

Beispiele für entsprechende anorganische Stoffe sind Bentonite oder Siliciumdioxid – letzteres entweder als feinverteiltes Silicagel oder, bevorzugt, als hochdisperse Kieselsäure.

2

Die erfindungsgemäß zu verarbeitenden Mischungen können weitere Zusätze enthalten wie Füllstoffe, Farbstoffe, Farbpigmente, Beschleuniger, Vernetzer, Polyole, Inhibitore, oder Netzmittel.

Füllstoffe sind insbesondere Granulate mit einer durchschnittlichen Größe von 3 bis 6 mm aus elastischem Material wie Gummi, Polyurethan, Synthesekautschuk. Sie können in Mengen von 20 bis 45 Gew.-% bezogen auf die fertige Mischung einerseits in die zu vergießende Mischung eingearbeitet werden oder aber auch in die frisch vergossene Mischung eingestreut werden. Farbstoffe und -pigmente werden häufig zur Farbgebung des Belages benötigt.

Polyole, Beschleuniger, Stabilisatoren und Vernetzer lassen sich im Rahmen des üblicherweise bei Polyurethan bekannten einsetzen um die Härtungs- oder Vernetzungsreaktion zu steuern. So ist z.B. mitunter bei stark geneigten Flächen eine sehr kurze Verarbeitungszeit notwendig, um ein einseitiges Abfließen des Belags zu vermeiden.

Die Härte des Belages kann durch Auswahl der Präpolymere, durch deren Vermischen mit Weichmachern oder durch Reaktion mit eingesetzten Polyolen vermindert werden, sie kann aber auch durch Einsatz von zusätzlichen mehrfunktionellen Verbindungen, den Vernetzern, gesteigert werden, so daß je nach Anforderung entweder weiche Spielplatzbeläge oder harte Tennisbeläge erhalten werden.

Die Verwendung von Netzmitteln anionischen, kationischen, amphoteren oder nicht ionogenen Tensiden in Mengen von 0,1 bis 5%, bezogen auf die Gesamtmischung ist zwar nicht zwingend, sie bietet aber einen doppelten Vorteil :

Die Verteilung des Wassers im Präpolymer wird verbessert und damit die Entmischung verzögert und die Viskosität der entsprechenden Emulsion wird erniedrigt.

Die Mengen der einzelnen Komponenten werden so festgelegt, daß ein fließfähiges Gemisch entsteht, das sich gut auf der Unterlage (Asphaltschicht, Beton, Holz oder Kunststoffmatte) verteilt und aus dem eingerührte Luftblasen entweichen können, ohne Krater zu hinterlassen. Andererseits muß die Mischung so eingestellt sein, daß keine Schaumbildung und keine Abtrennung der wäßrigen Phase erfolgt. Unter Beachtung dieser allgemeinen Anforderungen können die Komponenten in den folgenden Mischungs-Verhältnissen eingesetzt werden :

100 Gewichtsteile Polyurethanpräpolymer oder dessen Lösung

20-45 Gewichtsteile, bevorzugt 30-40 Gewichtsteile Wasser 3-6 Gewichtsteile, bevorzugt

4,5-5,5 Gewichtsteile eines Zusatzes aus 70-50% Kohlendioxid bindendem Mittel, 30-50% Wasser adsorbierenden Mittel und gegebenenfalls 0,1-5% eines Netzmittels.

Zusätzlich können dieser Mischung noch 1-2 Gewichtsteile Farbe oder Farbpigmente und/oder 20-45 Gewichtsteile eines Granulats aus einem gummielastischen Material beigegeben werden.

Zur Herstellung der erfindungsgemäßen, nach der Härtung den Belag bildenden Mischung, können die Einzelkomponenten in beliebiger Reihenfolge miteinander gemischt werden, wobei als Mischaggregat ein handelsüblicher Flügelrührer oder eine an Baustellen übliche Mischvorrichtung bestehend aus einer Bohrmaschine mit aufgesetztem Rührstab ausreicht. Da sich einerseits feinverteilte Feststoffe mit diesen Maschinen schlecht und unter Staubentwicklung in das Polyurethanpräpolymer einarbeiten lassen und da andererseits ab dem Kontakt des Präpolymers mit Wasser die Reaktion des Isocyanats und damit der Härtungsvorgang beginnt, hat sich die folgende Herstellung der Mischung als zweckmäßig erwiesen : Das Kohlendioxid bindende Mittel, das Wasser adsorbierende Mittel, Netzmittel und eventuell Füll- und Zusatzstoffe einschließlich der Vernetzer werden gemäß ihrer Anteile in Wasser vordispergiert. Derartige wäßrige Dispersionen sind sehr lange lagerfähig und müssen lediglich kurz vor Verwendung aufgerührt werden. Zur Herstellung der erfindungsgemäßen Mischung wird lediglich das Polyurethanpräpolymer, das gegebenenfalls mit einem Lösemittel, Weichmacher oder Inhibitor vorgemischt ist, mit der wäßrigen Dispersion vernetzt und vermischt (etwa 30 s mit 500 bis 2000 U/min). Dabei kann ein eventuell eingesetzter Reaktionsbeschleuniger zugesetzt werden. Desgleichen ist es zweckmäßig, bei diesem Schritt das elastische Granulat zuzugeben, sofern derartige Beläge gewünscht werden.

Die Mischung wird nun sofort auf die Unterlage gegossen und verteilt.

Gegen Ende der Verarbeitungszeit, wenn die Mischung so zäh geworden ist, daß ein aufgestreutes Granulat zwar noch benetzt wird aber nicht mehr in der Mischung versinkt, kann die Belagsoberfläche mit einem Granulat aus einem gummielastischen Material abgestreut werden.

Beläge, hergestellt unter Verwendung der erfindungsgemäßen Mischungen mit oder ohne Granulatfüllung, abgestreut mit Granulat oder nicht abgestreut finden Verwendung als Spiel- und Sportplatzbeläge. Nicht mit einem gummielastischen Granulat gefüllte und nicht abgestreute Beläge finden Verwendung als Tennisbeläge oder als Abdichtungen im Bausektor. Belagsmischungen, die ohne oder mit einem feinteiligen Granulat (durchschnittliche Größe 0,5-1 mm) gefüllt sind, eignen sich insbesondere als Spritzbeschichtung für neue Beläge und Abdichtungen oder für Reparaturen alter Beläge.

## Beispiele

### A. Wäßrige Dispersion

In 3,2 kg Leitungswasser werden mit Hilfe eines Flügelrühres (750 U/min) 242 g Magnesiumoxid (rein, durchschnittliche Korngröße 10-50 μm), 146 g disperse Kieselsäure, 28 g Eisenoxidpigment und 16 g Seifenpulver dispergiert.

### B. Polyurethanpräpolymer

Das eingsetzte Polyurethanpräpolymer ist eine Präpolymerlösung auf der Basis Diphenylmethandiisocyanat mit folgenden Eigenschaften :

```
NCO-Gehalt:              : 3,8 %
Viskosität bei 20 °C     : 2.500 mPas
Dichte bei 20 °C         : 1,03 g/m³
Lösemittelgehalt         : 13 Gew.%
(Butylacetat)
```

### Beispiel 1

In 10 kg der unter B. charakterisierten Präpolymerlösung werden 4,2 kg der unter A. beschriebenen Dispersion und 4,3 kg eines Polyurethangranulats gegeben und mit Hilfe eines auf eine Bohrmaschine aufgesetzten Mischstabes innerhalb von 30 s bei 1500 U/min vermischt.

Die Mischung wird in einer 13 mm dicken Schicht auf eine vorgefertigte durchlässige Asphaltfläche gegossen, die 10 min vorher mit Wasser benetzt worden war.

Die Mischung verteilt sich zu einem ebenen Belag mit glatter Oberfläche und härtet innerhalb von 24 h zu einer im wesentlichen gasblasenfreien, elastischen, begehbaren Masse aus. Die Haftung auf dem Untergrund ist einwandfrei.

### Beispiel 2

In 10 kg der unter B. charakterisierten Präpolymerlösung werden 4,2 kg der unter A. beschriebenen Dispersion gegeben und mit Hilfe eines auf eine Bohrmaschine aufgesetzten Mischstabes innerhalb von 30 s bei 1500 U/min vermischt. Die Mischung wird in einer 3 mm dicken Schicht auf eine befeuchtete, vorgefertigte Platte mit geschlossenen Poren aus pressverdichtetem und gebundenem Kunststoffgranulat gegossen. Sie verteilt sich zu einem gleichmäßigen ebenen Belag. Eingerührte Luftblasen steigen schnell auf und zerplatzen. Die Belagoberfläche schließt sich dannach wieder.

Nach 30 min bei 20°C wird die Masse zähflüssiger. Sie wird nun mit in einem elastischen Polymergranulat abgestreut. Das Granulat taucht zwar in die Oberfläche ein, versinkt aber nicht.

Nach 24 h ist das Material gehärtet, die Bahn begehbar mit an der Oberfläche fest haftendem elastischem Granulatbelag. Die Haftung auf dem Untergrund ist einwandfrei.

## Ansprüche

1. Verfahren zur Herstellung eines Belags auf Basis Polyurethan durch Vergießen eines Gemisches aus isocyanathaltigem Material und Füll- und Zusatzstoffen, **dadurch gekennzeichnet,** daß ein flüssiges Polyurethanpräpolymer mit einem Isocyanatgehalt von 2,5 bis 8,5% mit Wasser, einem Kohlendioxid bindenden, einem Wasser adsorbierenden Mittel und gegebenenfalls weiteren Füll- und Zusatzstoffen gemischt wird, die Mischung innerhalb ihrer Verarbeitungszeit auf eine Unterlage gegossen wird und dort bei Umgebungstemperatur härtet.

2. Verfahren nach Anspruch 1, **dadurch gekennzeichnet,** daß der Mischung 20 bis 45%, bezogen auf das Präpolymer, eines elastischen Polymergranulats beigegeben werden.

3. Verfahren nach den Ansprüchen 1 bis 2, **dadurch gekennzeichnet,** daß die ausgegossene Mischung

EP 0 312 706 B1

gegen Ende der Verarbeitungszeit mit einem Granulat eines elastischen Materials abgestreut wird.

4. Verfahren nach Anspruch 1, **dadurch gekennzeichnet,** daß ein Polyurethanpräpolymer verwendet wird, das eine Viskosität von 2.000 bis 6.000 mPas (20°C) hat.

5. Verfahren nach Anspruch 1 und 4, **dadurch gekennzeichnet,** daß ein Polyurethanpräpolymer verwendet wird, das bis zu 15% eines organischen Lösemittels enthält.

6. Verfahren nach den Ansprüchen 1 bis 5, **dadurch gekennzeichnet,** daß mit dem Präpolymer eine Suspension vermischt wird, die ein Kohlendioxid bindendes Mittel, ein Wasser adsorbierendes Mittel, Wasser und gegebenenfalls ein Netzmittel und/oder einen Farbstoff oder ein Farbpigment enthält.

7. Verfahren nach den Ansprüchen 1 bis 6, **dadurch gekennzeichnet,** daß das Kohlendioxid bindende Mittel Magnesiumoxid ist.

8. Verfahren nach den Ansprüchen 1 bis 6, **dadurch gekennzeichnet,** daß das Wasser adsorbierende Mittel ein hochdisperses Siliciumdioxid ist.

9. Verfahren nach den Ansprüchen 1 bis 6, **dadurch gekennzeichnet,** daß das Wasser adsorbierende Mittel ein Bentonit ist.

10. Verfahren nach den Ansprüchen 1 bis 9, **dadurch gekennzeichnet,** daß auf 100 Gewichtsteile Polyurethanpräpolymer oder dessen Lösung 20-45 Gewichtsteile Wasser und 3-6 Gewichtsteile eines Zusatzes aus 70-50% Kohlendioxid bindendem Mittel und 30-50% Wasser adsorbierendem Mittel und gegebenenfalls 0,1-5% eines Netzmittels und weitere Füll- und Zusatzstoffe verwendet werden.

11. Verwendung der Beläge nach den Ansprüchen 1 bis 10, für Spiel- und Sportplatzbeläge.

12. Verwendung der Beläge nach den Ansprüchen 1 und 4 bis 10 als Tennisbeläge.

13. Verwendung der Beläge nach den Ansprüchen 1 bis 10 als Abdichtung im Bausektor.

14. Verwendung der Beläge nach den Ansprüchen 1 bis 10 als Spritzbeschichtung.

## Claims

1. A method for the manufacture of a covering on a polyurethane base by casting a mixture of material containing isocyanate and fillers and aggregates, characterised in that a liquid polyurethane prepolymer having an isocyanate content of between 2.5 and 8.5% is mixed with water, a carbon dioxide-bonding agent, a water-absorbing agent and optionally further fillers and aggregates, the mixture is poured within its processing time onto a base and hardens there at ambient temperature.

2. A method according to claim 1, characterised in that 20 to 45%, relative to the prepolymer, of an elastic polymer granulate is added to the mixture.

3. A method according to claims 1 to 2, characterised in that, towards the end of the processing time, a granulate of an elastic material is scattered onto the cast mixture.

4. A method according to claim 1, characterised in that a polyurethane prepolymer is used which has a viscosity of between 2.000 and 6.000 mPas (20°C).

5. A method according to claim 1 and 4, characterised in that a polyurethane prepolymer is used which contains up to 15% of an organic solvent.

6. A method according to claims 1 to 5, characterised in that a suspension is mixed with the prepolymer, which suspension contains a carbon dioxide-bonding agent, a water-absorbing agent, water and optionally a wetting agent and/or a dye or colour pigment.

7. A method according to claims 1 to 6, characterised in that the carbon dioxide-bonding agent is magnesium oxide.

8. A method according to claims 1 to 6, characterised in that the water-absorbing agent is a highly dispersed silicon dioxide.

9. A method according to claims 1 to 6, characterised in that the water-absorbing agent is a bentonite.

10. A method according to claims 1 to 9, characterised in that per 100 parts by weight polyurethane prepolymer or a solution thereof. 20-45 parts by weight water and 3-6 parts by weight of an admixture of 70-50% carbon dioxide-bonding agent and 30-50% water-absorbing agent and optionally 0.1-5% wetting agent and further fillers and aggregates are used.

11. Application of the covering according to claims 1 to 10 for playing and sports areas.

12. Application of the covering according to claims 1 and 4 to 10 as a tennis court surface.

13. Application of the covering according to claims 1 to 10 as a sealing means in the construction field.

14. Application of the covering according to claims 1 to 10 as a sprayed coating.

5

**Revendications**

1. Procédé pour la fabrication d'un revêtement à base de polyuréthane par coulage d'un mélange constitué par une matière contenant de l'isocyanate et des additifs et matières de charge, caractérisé en ce qu'un prépolymère de polyuréthane liquide ayant une teneur en isocyanate de 2,5 jusqu'à 8,5% est mélangé avec de l'eau, avec un moyen liant l'anhydride carbonique, un moyen adsorbant l'eau et éventuellement avec des additifs et matières de charge supplémentaires, le mélange est coulé sur un support pendant la durée de son traitement et on le laisse s'y durcir à la température ambiante.

2. Procédé selon la revendication 1, caractérisé en ce que l'on ajoute au mélange 20 à 45%, rapporté au prépolymère, d'un granulat polymère élastique.

3. Procédé selon les revendications 1 ou 2, caractérisé en ce que le mélange coulé est épandu avec un granulat d'une matière élastique vers la fin de sa période de traitement.

4. Procédé selon la revendication 1, caractérisé en ce que l'on utilise un prépolymère de polyuréthane qui présente une viscosité de 2000 à 6000 mPa (20°C).

5. Procédé selon la revendication 1 et 4, caractérisé en ce que l'on utilise un prépolymère de polyuréthane qui contient jusqu'à 15% d'un solvant organique.

6. Procédé selon les revendications 1 à 5, caractérisé en ce que l'on mélange avec le prépolymère une suspension qui contient un moyen liant l'anhydride carbonique, un moyen adsorbant l'eau, de l'eau et éventuellement un agent mouillant et/ou un colorant ou un pigment colorant.

7. Procédé selon les revendications 1 à 6, caractérisé en ce que l'agent liant l'anhydride carbonique est de l'oxyde de magnésium.

8. Procédé selon les revendications 1 à 6, caractérisé en ce que le moyen adsorbant l'eau est un dioxyde de silicium à haut degré de dispersion.

9. Procédé selon les revendications 1 à 6, caractérisé en ce que l'agent adsorbant l'eau est une bentonite.

10. Procédé selon les revendications 1 à 9, caractérisé en ce que pour 100 parties en poids de prépolymère de polyuréthane ou de sa solution, on utilise 20-45 parties en poids d'eau et 3-6 parties en poids d'un additif constitué par 70-50% d'un agent liant l'anhydride carbonique et 30-50% d'un agent adsorbant l'eau et éventuellement 0,1-5% d'un agent mouillant et des matières de charge et additifs supplémentaires.

11. Utilisation des revêtements selon les revendications 1 à 6 pour des revêtements de terrains de jeux et de sports.

12. Utilisation des revêtements selon les revendications 1 et 4 jusqu'à 10 comme revêtements de courts de tennis.

13. Utilisation des revêtements selon les revendications 1 à 10 en tant qu'étanchéité dans le domaine de la construction.

14. Utilisation des revêtements selon les revendications 1 à 10 en tant que revêtement par pulvérisation.